# EUROPEAN PATENT SPECIFICATION

(11) **EP 0 500 630 B1**
(45) Date of publication and mention of the grant of the patent: **08.03.1995**
(21) Application number: 90916337.0
(22) Date of filing: 06.11.1990
(51) Int. Cl.: G02C 7/04

(54) **CONTACT LENS**
KONTAKTLINSE
LENTILLE DE CONTACT

(30) Priority: 09.11.1989 GB 8925302
(43) Date of publication of application: 02.09.1992
(73) Proprietor: BRITISH TECHNOLOGY GROUP LTD, London SE1 6BU (GB)
(72) Inventor: SEDEN, William, Edward, Hampshire PO15 6LN (GB); HAMILTON, Ronald, Shade, Bassett, Southampton SO2 3NF (GB)
(74) Representative: Neville, Peter Warwick
(86) International application number: GB9001699
(87) International publication number: WO9107687

(56) References cited:
- EP-A- 0 042 679
- EP-A- 0 256 139
- EP-A- 0 367 513
- DE-B- 826 204
- GB-A- 922 871
- US-A- 3 228 741
- US-A- 3 833 786
- US-A- 3 971 910
- US-A- 4 068 933
- International Eyecare, volume 1, no. 4, September 1985, O. Wichterle et al.: "Perforated soft hydrogel contact lenses", pp. 315-318
- American Journal of Optometry and Archives of American Academy of Optometry, June 1967, R.M. Hill et al.: "Respiratory profiles of the corneal epithelium", pp. 365-373

## Description

This invention relates to a contact lens and in particular to ways of increasing the gas permeability of a contact lens.

A hard contact lens such as of polymethyl-methacrylate has advantages of longevity, biocompatability, strength, durability, wettability and the ability to mask up to a certain degree of astigmatism but has the drawback of effectively starving the cornea surface of oxygen. This leads to oedema (thickening of the cornea) and other undesirable effects.

A soft contact lens such as of a hydrogel has advantages of oxygen permeability and comfort but is in turn susceptible to accumulation of proteins and other deposits, and is required to be kept scrupulously clean and sterile.

The present invention proposes to combine these advantages as appropriate, by enhancing the oxygen permeability of any contact lens material.

To avoid oedema, it has been proposed in US Patent 3833786 to fenestrate a contact lens by holes sufficiently large for bulk tear flow to take place through them, thus transferring sufficient dissolved oxygen to the eye surface. This is expensive and difficult to achieve consistently and may impair the perceived clarity of the contact lens. Various techniques have been proposed for the fenestration of contact lenses. One system (US Patent 3227855) uses a spark to locally burn a small hole through the lens and others (US Patent 3833786 above and US 3971910) describe laser based systems The lasers described are of the CO₂ type in which a concentrated beam is used to burn through the lens to produce the holes.

These patents start from the basis that the fenestration itself is to provide a path for tears to flow through the lens enabling fresh oxygenated tears to feed the cornea. Most experiments have accordingly been conducted on lenses with a few (generally less than 10) large diameter (generally greater than 200 microns) holes. Wichterle and Krejci (International Eyecare, September 1985 page 315) recommend contact lens perforation in the centre only, i.e. the optically most disadvantageous location. Hill & Leighton (American Journal of Optometry And Archives of American Academy of Optometry, June 1967 page 365) conclude that no corneal benefit results (even directly under the hole) from a 1.0mm hole nor from holes as small as 25 microns. These latter holes were spark generated at a density of 3/mm². There has thus been every reason to abandon the concept of fenestrating contact lenses, especially with small holes.

According to the present invention, a contact lens has holes of a diameter less than 150 microns going part or all the way from one lens surface to the other, in sufficient number to account for at least 5% of the area of the peripheral part of the lens, with substantially no holes elsewhere, the peripheral part being defined as that outside a central region of 5-11mm diameter. Preferably there are at least 2000 and preferably over 5000 holes more preferably over 10⁴, most preferably over 5 x 10⁴ possibly over 10⁵ such as over 5 x 10⁵ holes, even over 10⁶ holes.

Preferably the holes are smaller than 100»m, preferably smaller than 50»m, more preferably smaller than 30»m, ideally smaller than 10»m, e.g. under 50; more preferably under 20, optionally under 10, desirably under 5, if possible under 2 x 10⁻⁵mm² in area, or the holes are in a variety of these sizes. Smaller holes are considered likely to be more comfortable to the lens wearer. The holes go from one lens surface towards the other. The holes may be blind or may interconnect the two lens surfaces or there may be some of each. The blind holes if any may start from the convex or the concave surface or some of each, preferably from the concave surface, whereby the eyelid nerves, which have been found to be more sensitive than the cornea, are not aggravated, there is no risk to the appearance of the lens and deposits will not lodge in the holes. Preferably, there are at least 100 holes/mm² over part(s) of the lens. Preferably the contact lens has holes (which may be partly or wholly blind holes) in sufficient number to account for at least 10%, more preferably at least 15%, most preferably at least 20%, optionally at least 25%, generally at least 30%, desirably at least 35% and suitably at least 40% of the area of the whole of the peripheral part of the lens, preferably substantially uniformly over that part. The peripheral part of the lens is (as stated) deemed to be that outside a central region of 5-11 (e.g. 7-9)mm diameter, within which there are preferably fewer (e.g. under 0.7, 0.6 or ½mm² altogether) or no holes.

These holes are conveniently machined many, several or all at a time by an excimer laser. If only the peripheral part of the lens is machined, this may be done in sectors. This has the advantage that the hole axes of each sector, i.e. the laser direction, can be more closely approximated to the normal to the surface of the lens in the middle of each sector, lessening any optical interference by the holes and minimising the distance for oxygen transport. Both the wearer and any observer can be unaware of the fact that the lens has these holes. Part drilled holes are ideally produced by excimer laser which is a pulse-type laser. Each pulse ablates a fixed amount, or depth, of material. Typically, 120 pulses are required to drill through a 0.1mm thick contact lens. Lenses have been part drilled using 50, 70, 80, 90, 100 and 120 pulses thus producing holes 42%, 58%, 67%, 75%, 83% and 100% through the thickness of the lens.

It may be advantageous to vary the depth of the part drilled holes across the surface of the lens in proportion to the lens thickness (for example using an iris mechanism coupled to the laser mask). This would tend to a more uniform distribution of oxygen transmissibility and hence improved corneal health. Alternatively, the (blind) holes could be wider in proportion to the lens thickness at that point and all of the same depth. The hole density (holes/mm²) can also be varied according to the lens thickness to help equalise the oxygen supply.

The excimer laser is preferably applied through a mask and the masked laser beam then focussed on the lens. In this way, the mask, which must mechanically withstand a proportion of the laser output, can be made relatively massive and laser-proof compared with the lens. The mask might not be so durable if used in contact mode with the lens and thus necessarily being much smaller.

The lens is preferably mounted (during this operation) on a radiation-absorbing support e.g. a polypropylene ball. If the support were reflective, laser radiation through a completed hole might scatter off the support, doing random damage to the lens. European Patent Publication 367513A describes a method of manufacture in which the contact lens is cast and retained on a polypropylene mould, ideally suited for presentation to an excimer laser drilling system. That Publication states that the lens may be subject to perforation by a plurality of square holes approximately 150 microns in size by application of a laser beam, at a hole density, deducible from the drawing, of about 30/mm².

A high output laser is preferred, for speed of production and to reduce the incidence of hole taper; the ratio (laser entrance hole size:laser exit hole size), which should ideally be unity (= parallel-sided hole) increases with lens thickness but does so progressively less as laser power is increased. For example using a laser fluence of 4J/cm², a 22-micron diameter entrance hole will taper to become a 10-micron exit hole when drilled through a 450-micron thick lens. Using the 'mask then focus' technique described above permits an increased power of laser to be used with the advantages of yielding more accurately parallel-sided holes and of reducing the laser-machining time to form the holes. The laser wavelength will be chosen according to the lens material. For those materials in commonest use, a wavelength of 160-230nm, preferably 185-200nm was found suitable.

Although the contact lens may be of any material of which such lenses are normally made, according to the clinical requirements of the wearer, an advantageous material is hydroxyethylmethacrylate. This combines a certain degree of softness and inherent oxygen permeability with some strength and durability. The making of the holes according to the invention will make inroads into the strength and durability, which is paradoxically an advantage in that a wearer will be discouraged from the medically unsound practice of trying to clean and re-use a disposable contact lens if it is sufficiently fragile.

It is postulated that capillary attraction will for all practical purposes prevent bulk flow of tear fluid through these holes, but they cumulatively account for such an area of the lens surface that oxygen supply from the air by dissolution into tear fluid and diffusion in solution through the static columns of tear fluid in the holes to the eye surface is more than adequate. Blind holes contribute to oxygen transport by lessening the distance through the lens itself which oxygen would have to traverse.

In the case of holes interconnecting the lens surfaces, oxygen permeability is added to the contact lens according to the invention regardless of the other properties of the material comprising the lens.

Such a lens may be characterised as microperforated.

The invention will now be described by way of example.

The contact lenses used were variously of polymethylmethacrylate and other silicon acrylates, and hydroxyethylmethacrylate (38% water), 9mm in diameter; and of higher water content materials (hydrogels), the hydrogels being a standard 14mm in diameter. The hydrogel lenses were perforated in both the xerogel and hydrated states. Holes 50 microns across at the entrance and 100 »m apart were drilled by excimer laser of λ = 193 nm and 20ns pulse length at 5Hz. The fluence (flux × time) at the lens (workpiece) was 550mJ/cm². The exit diameter of these holes was 25 microns. In other experiments, the holes were 80, 50, 20 and 15 microns at the exit. These holes were drilled in clusters with 34% of the surface area given over to holes. Four clusters of 170 holes each were grouped in a test area with about 23% of the area given over to holes (the difference between 34% and 23% being attributable to the margins between the clusters). In other lenses, the hole centres were 100»m apart in rows themselves 58»m apart staggered such that the hole spacing across rows was also 100»m. In other experiments holes of 25 microns entry diameter have been drilled using projection techniques. The exit diameter of these holes varied from 20 microns in thin sections (less than 150 microns) to 1-2 microns in thick sections (greater than 150 microns). Holes with no taper are ideal since tapering produces two adverse effects. Firstly, tapered holes tend to worsen the optical quality of the lens (increasingly so as the angle of the taper increases) and secondly, the larger, entry hole, limits the hole density.

The contact lenses were 0.05mm, 0.10mm, 0.15mm and 0.20mm thick. One tapered from 0.05 to 0.50mm thickness.

The excimer laser used pulsed gas lasers which operate at a number of fixed wavelengths throughout the ultraviolet. Lasing occurs as the result of a pulsed electrical discharge occurring in a high pressure gas. The commonly used three-component gas mixture is made up mostly of a buffer gas such as neon, a smaller amount of a rare gas such as argon, krypton or xenon, and a trace amount of a halogen donor such as hydrogen chloride or fluorine. The combination of rare gas and halogen determine the output wavelength, with the three most powerful excimer lasers being argon fluoride (ArF) at 193 nm, krypton fluoride (KrF) at 248 nm, and xenon chloride (XeCl) at 308 nm. Excimer lasers operate only in a pulsed mode, with pulse durations typically of the order of ten nanoseconds, and output energies per pulse of a few hundred millijoules. This is a unique combination of ultraviolet output and high peak power, and can remove material through the process of ablation. This non-thermal mechanism differs markedly from thermal processes such as melting and vaporization that are commonly associated with other types of laser materials processing. With excimer lasers, material can be removed with very high precision and with virtually no heat-affected zone in the surrounding regions of the contact lens.

It is distinguished from other types of industrial laser processing in which a tightly focussed spot is scanned across the workpiece, resulting in only one hole being drilled at a time; excimer lasers are best utilized in a broad beam mode. Therefore the complex patterns of holes in the contact lens is defined by mask imaging rather than by intricate movements of the beam or workpiece.

The mask intercepts the excimer laser beam, which is much broader than a contact lens and continues its path in parallel and now imagewise format; it is only then focussed by a lens or other optical system to a reduced-size image on the contact lens to be microperforated. This reduction allows for great accuracy in the product without imposing impossibly fine tolerances on the mask.

An important factor to be taken into account when drilling curved surfaces is the depth of focus of the laser system. This is another factor which limits the size of the drilled area. Holes of 50 microns have been drilled in a contact lens with the laser system having a 6x de-magnification (i.e. using a 300 micron-hole mask). The depth of focus of this system was 300 microns.

From this result it can be calculated that the theoretical maximum diameter of the drilled zone where all of the holes are in focus is 2.17 mm. This assumes that the focal plane is flat. In fact, it is found that the focal plane is convex as seen by the target. This obviously reduces the effective diameter of the drilling zone on convex lenses.

There are two possible approaches that can be taken to maximise the diameter of the drilling zone:
a) drill the concave side of the lens
b) change the shape of the focal plane using optical components.

Both of these are practical propositions.

The spacing, or pitch, between holes may be constant across the lens or alternatively it may vary in proportion to the lens thickness. This approach would tend to a more uniform distribution of oxygen transmissibility and hence improved corneal health. This is particularly imporant in high minus power lenses since, by design, the cross-sectional thickness of the lens varies considerably, with the thickest portion being located in the mid-periphery. For practical purposes, such as ensuring adequate mechanical coherence of the lens, its outermost rim, up to ½mm or 1mm from the periphery, may be left unperforated.

There may be clinical advantages to drilling holes part-way through the contact lens. For example, if, as had been suggested, the primary cause of discomfort in fenestrated contact lenses is the eyelid rubbing over the edge of the holes, this could be avoided if the lens was drilled part through from the concave side thus leaving the convex side unbroken. This benefit must be balanced against any reduction in oxygen transmissibility which may occur by leaving a thin membrane intact at the bottom of each micro-fenestration. This part-drilled lens, if preloaded with medicament, is ideal for controlled and sustained-release dosage of medicament to or via the cornea of the eye. The eyelid could be correspondingly treated using contact lenses part-way drilled from the convex side.
A hydroxyethyl methacrylate lens (38% water) -2 dioptres and 14mm diameter, central thickness 0.06mm and concave curve of 8.4mm radius was mounted on a polypropylene ball. This is a very typical contact lens.

An excimer laser pulsing at 5 Hz with an output of 1J/cm² was focussed through a mask to a 'demagnification' of x6 onto a sector of the lens. 120 pulses were needed to drill holes through the lens, and samples were made using 50, 70, 80, 90, 100, 120 and 150 pulses. The mask, as projected onto the lens being drilled, had a 24° sector (leaving the central 8mm diameter and the outermost rim of about ½mm of the lens undrilled) containing 25»m diameter circular holes spaced so that holes accounted for half the area of the sector, thus about 6600 holes per sector. The lens was rotationally indexed to drill ten equispaced sectors, although of course fifteen could have been accommodated, and indeed 14 or 15 would be preferred in production lenses.

A similar lens where the holes were 6»m in diameter could thus be drilled to accommodate just over one million holes without encroaching on the most optically critical central part of the lens. However, as mentioned above, a certain hole density in that central part can be acceptable, such as up to about 0.6mm² altogether.

## Claims

1. A contact lens, having holes of a diameter less than 150 microns going part or all the way from one lens surface to the other, in sufficient number to account for at least 5% of the area of the peripheral part of the lens, with substantially no holes elsewhere, the peripheral part being defined as that outside a central region of 5-11mm diameter.

2. A contact lens according to Claim 1, wherein the holes account for at least 10% of said area.

3. A contact lens according to Claim 2, wherein the holes account for at least 15% of said area.

4. A contact lens according to Claim 3, wherein the holes account for at least 20% of said area.

5. A contact lens according to Claim 4, wherein the holes account for at least 25% of said area.

6. A contact lens according to Claim 4, wherein the holes account for at least 30% of said area.

7. A contact lens according to Claim 4, wherein the holes account for at least 35% of said area.

8. A contact lens according to Claim 4, wherein the holes account for at least 40% of said area.

9. A contact lens according to any preceding claim, wherein the holes are smaller than 30»m in diameter.

10. A contact lens according to Claim 9, wherein the holes are smaller than 10»m in diameter.

11. A contact lens according to any preceding claim, wherein the holes are each under 50 x 10⁻⁵mm² in area.

12. A contact lens according to Claim 11, wherein the holes are each under 10 x 10⁻⁵mm² in area.

13. A contact lens according to Claim 12, wherein the holes are each under 5 x 10⁻⁵mm² in area.

14. A contact lens according to Claim 13, wherein the holes are each under 2 x 10⁻⁵mm² in area.

15. A contact lens according to any preceding claim, wherein the holes are in a variety of sizes.

16. A contact lens according to any preceding claim, wherein there are at least 2000 of said holes.

17. A contact lens according to Claim 16, wherein there are over 5000 of said holes.

18. A contact lens according to Claim 17, wherein there are over 10⁴ of said holes.

19. A contact lens according to Claim 18, wherein there are over 5 x 10⁴ of said holes.

20. A contact lens according to Claim 19, wherein there are over 10⁵ of said holes.

21. A contact lens according to Claim 20, wherein there are over 5 x 10⁵ of said holes.

22. A contact lens according to Claim 21, wherein there are over 10⁶ of said holes.

23. A contact lens according to any preceding claim, wherein over at least part of the lens there are at least 100 holes/mm².

24. A contact lens according to any preceding claim, wherein all the holes interconnect the two lens surfaces.

25. A contact lens according to any of Claims 1 to 23, wherein some of the holes interconnect the two lens surfaces and some go only part way from one lens surface towards the other.

26. A contact lens according to any of Claims 1 to 23, wherein all the holes go only part way through the thickness of the lens.

27. A contact lens according to Claim 25 or 26, wherein all the 'part way' holes start from one lens surface.

28. A contact lens according to Claim 27, wherein said one lens surface is the concave surface.

29. A contact lens according to Claim 25 or 26, wherein some of the 'part way' holes start from one lens surface and the others from the other.

30. A contact lens according to any preceding claim, wherein the holes are provided substantially uniformly over the peripheral part of the lens.

31. A contact lens according to any preceding claim, wherein the holes are machined by excimer laser.

32. A contact lens according to Claim 31, wherein the holes are drilled in one sector of the lens at a time.

33. A contact lens according to Claim 31 or 32, wherein the excimer laser is applied through a mask and the masked laser beam then focussed on the lens.

34. A contact lens according to any preceding claim, made of polymethylmethacrylate, hydroxyethyl methacrylate or hydrogel.

35. A contact lens according to any preceding claim, whose holes contain medicament.

## Patentansprüche

1. Kontaktlinse mit Löchern, deren Durchmesser kleiner ist als 150 Mikrometer, die sich teilweise oder ganz von einer Linsenoberfläche zur anderen in ausreichender Anzahl erstrecken, so daß sie wenigstens 5% der Fläche des äußeren Teils der Linse einnehmen, wobei im wesentlichen keine Löcher an anderer Stelle zu finden sind, wobei der äußere Teil als außerhalb eines inneren Bereiches von 5-11 mm Durchmesser liegend definiert ist.

2. Kontaktlinse nach Anspruch 1, dadurch gekennzeichnet, daß die Löcher wenigstens 10% dieser Fläche einnehmen.

3. Kontaktlinse nach Anspruch 2, dadurch gekennzeichnet, daß die Löcher wenigstens 15% dieser Fläche einnehmen.

4. Kontaktlinse nach Anspruch 3, dadurch gekennzeichnet, daß die Löcher wenigstens 20% dieser Fläche einnehmen.

5. Kontaktlinse nach Anspruch 4, dadurch gekennzeichnet, daß die Löcher wenigstens 25% dieser Fläche einnehmen.

6. Kontaktlinse nach Anspruch 4, dadurch gekennzeichnet, daß die Löcher wenigstens 30% dieser Fläche einnehmen.

7. Kontaktlinse nach Anspruch 4, dadurch gekennzeichnet, daß die Löcher wenigstens 35% dieser Fläche einnehmen.

8. Kontaktlinse nach Anspruch 4, dadurch gekennzeichnet, daß die Löcher wenigstens 40% dieser Fläche einnehmen.

9. Kontaktlinse nach einem der vorhergehenden Ansprüche, dadurch gekennzeichnet, daß der Durchmesser der Löcher kleiner ist als 30 »m.

10. Kontaktlinse nach Anspruch 9, dadurch gekennzeichnet, daß der Durchmesser der Löcher kleiner ist als 10 »m.

11. Kontaktlinse nach einem der vorhergehenden Ansprüche, dadurch gekennzeichnet, daß die Fläche der Löcher jeweils kleiner ist als 50 x 10⁻⁵mm².

12. Kontaktlinse nach Anspruch 11, dadurch gekennzeichnet, daß die Fläche der Löcher jeweils kleiner ist als 10 x 10⁻⁵mm².

13. Kontaktlinse nach Anspruch 12, dadurch gekennzeichnet, daß die Fläche der Löcher jeweils kleiner ist als 5 x 10⁻⁵mm².

14. Kontaktlinse nach Anspruch 13, dadurch gekennzeichnet, daß die Fläche der Löcher jeweils kleiner ist als 2 x 10⁻⁵mm².

15. Kontaktlinse nach einem der vorhergehenden Ansprüche, dadurch gekennzeichnet, daß die Löcher unterschiedlich groß sind.

16. Kontaktlinse nach einem der vorhergehenden Ansprüche, dadurch gekennzeichnet, daß wenigstens 2000 Löcher vorhanden sind.

17. Kontaktlinse nach Anspruch 16, dadurch gekennzeichnet, daß mehr als 5000 Löcher vorhanden sind.

18. Kontaktlinse nach Anspruch 17, dadurch gekennzeichnet, daß mehr als 10⁴ Löcher vorhanden sind.

19. Kontaktlinse nach Anspruch 18, dadurch gekennzeichnet, daß mehr als 5 x 10⁴ Löcher vorhanden sind.

20. Kontaktlinse nach Anspruch 19, dadurch gekennzeichnet, daß mehr als 10⁵ Löcher vorhanden sind.

21. Kontaktlinse nach Anspruch 20, dadurch gekennzeichnet, daß mehr als 5 x 10⁵ Löcher vorhanden sind.

22. Kontaktlinse nach Anspruch 21, dadurch gekennzeichnet, daß mehr als 10⁶ Löcher vorhanden sind.

23. Kontaktlinse nach einem der vorhergehenden Ansprüche, dadurch gekennzeichnet, daß zumindest in einem Teil der Linse wenigstens 100 Löcher/mm² vorhanden sind.

24. Kontaktlinse nach einem der vorhergehenden Ansprüche, dadurch gekennzeichnet, daß alle Löcher die beiden Linsenoberflächen miteinander verbinden.

25. Kontaktlinse nach einem der Ansprüche 1 - 23, dadurch gekennzeichnet, daß einige der Löcher die beiden Linsenoberflächen miteinander verbinden und einige nur ein Stück von einer Linsenoberfläche zur anderen hin verlaufen.

26. Kontaktlinse nach einem der Ansprüche 1 - 23, dadurch gekennzeichnet, daß alle Löcher nur ein Stück durch die Dicke der Linse verlaufen.

27. Kontaktlinse nach Anspruch 25 oder 26, dadurch gekennzeichnet, daß alle Löcher, die nur ein Stück verlaufen, in derselben Linsenoberfläche beginnen.

28. Kontaktlinse nach Anspruch 27, dadurch gekennzeichnet, daß diese eine Linsenoberfläche die konkave Oberfläche ist.

29. Kontaktlinse nach Anspruch 25 oder 26, dadurch gekennzeichnet, daß einige der Löcher, die nur ein Stück verlaufen, in der einen Linsenoberfläche und die anderen in der anderen Linsenoberfläche beginnen.

30. Kontaktlinse nach einem der vorhergehenden Ansprüche, dadurch gekennzeichnet, daß die Löcher im wesentlichen gleichmäßig über den äußeren Teil der Linse verteilt sind.

31. Kontaktlinse nach einem der vorhergehenden Ansprüche, dadurch gekennzeichnet, daß die Löcher durch einen Excimer-Laser hergestellt werden.

32. Kontaktlinse nach Anspruch 31, dadurch gekennzeichnet, daß die Löcher in einem Abschnitt der Linse zu einem Zeitpunkt gebohrt werden.

33. Kontaktlinse nach Anspruch 31 oder 32, dadurch gekennzeichnet, daß der Excimer-Laser durch eine Maske eingesetzt und der maskierte Laserstrahl dann auf die Linse fokussiert wird.

34. Kontaktlinse nach einem der vorhergehenden Ansprüche, bestehend aus Polymethyl-Methacrylsäureester, Hydroxy-äthyl-Methacrylsäureester oder Hydrogel.

35. Kontaktlinse nach einem der vorhergehenden Ansprüche, deren Löcher ein Medikament enthalten.

## Revendications

1. Lentille de contact comprenant des trous ayant un diamètre inférieur à 150 microns, s'étendant sur une partie ou la totalité du trajet reliant une face de la lentille à l'autre, en un nombre suffisant pour constituer au moins 5 % de la superficie de la partie périphérique de la lentille, et pratiquement aucun trous ailleurs, la partie périphérique étant définie comme celle extérieure à une région centrale de 5-11 mm de diamètre.

2. Lentille de contact selon la revendication 1, dans laquelle les trous constituent au moins 10 % de ladite superficie.

3. Lentille de contact selon la revendication 2, dans laquelle les trous constituent au moins 15 % de ladite superficie.

4. Lentille de contact selon la revendication 3, dans laquelle les trous constituent au moins 20 % de ladite superficie.

5. Lentille de contact selon la revendication 4, dans laquelle les trous constituent au moins 25 % de ladite superficie.

6. Lentille de contact selon la revendication 4, dans laquelle les trous constituent au moins 30 % de ladite superficie.

7. Lentille de contact selon la revendication 4, dans laquelle les trous constituent au moins 35 % de ladite superficie.

8. Lentille de contact selon la revendication 4, dans laquelle les trous constituent au moins 40 % de ladite superficie.

9. Lentille de contact selon l'une quelconque des revendications précédentes, dans laquelle les trous présentent un diamètre inférieur à 30 »m.

10. Lentille de contact selon la revendication 9, dans laquelle les trous présentent un diamètre inférieur à 10 »m.

11. Lentille de contact selon l'une quelconque des revendications précédentes, dans laquelle chacun des trous présente une superficie inférieure à 50x10⁻⁵ mm².

12. Lentille de contact selon la revendication 11, dans laquelle chacun des trous présente une superficie inférieure à 10x10⁻⁵ mm².

13. Lentille de contact selon la revendication 12, dans laquelle chacun des trous présente une superficie inférieure à 5x10⁻⁵ mm².

14. Lentille de contact selon la revendication 13, dans laquelle chacun des trous présente une superficie inférieure à 2x10⁻⁵ mm².

15. Lentille de contact selon l'une quelconque des revendications précédentes, dans laquelle les trous présentent des tailles variées.

16. Lentille de contact selon l'une quelconque des revendications précédentes, dans laquelle il existe au moins 2000 desdits trous.

17. Lentille de contact selon la revendication 16, dans laquelle il existe plus de 5000 desdits trous.

18. Lentille de contact selon la revendication 17, dans laquelle il existe plus de 10⁴ desdits trous.

19. Lentille de contact selon la revendication 18, dans laquelle il existe plus de 5x10⁴ desdits trous.

20. Lentille de contact selon la revendication 19, dans laquelle il existe plus de 10⁵ desdits trous.

21. Lentille de contact selon la revendication 20, dans laquelle il existe plus de 5x10⁵ desdits trous.

22. Lentille de contact selon la revendication 21, dans laquelle il existe plus de 10⁶ desdits trous.

23. Lentille de contact selon l'une quelconque des revendications précédentes, dans laquelle, sur au moins une partie de la lentille, il existe au moins 100 trous/mm².

24. Lentille de contact selon l'une quelconque des revendications précédentes, dans laquelle tous les trous interconnectent les deux faces de la lentille.

25. Lentille de contact selon l'une quelconque des revendications 1 à 23, dans laquelle certains des trous interconnectent les deux faces de la lentille et certains ne s'étendent que sur une partie du trajet reliant une des faces de la lentille à l'autre.

26. Lentille de contact selon l'une quelconque des revendications 1 à 23, dans laquelle tous les trous s'étendent sur seulement une partie de l'épaisseur de la lentille.

27. Lentille de contact selon l'une quelconque des revendications 25 ou 26, dans laquelle tous les trous "à trajet partiel" partent d'une face de la lentille.

28. Lentille de contact selon la revendication 27, dans laquelle ladite face de la lentille est sa face concave.

29. Lentille de contact selon l'une quelconque des revendications 25 ou 26, dans laquelle certains des trous "à trajet partiel" partent d'une face de la lentille et les autres partent de l'autre.

30. Lentille de contact selon l'une quelconque des revendications précédentes, dans laquelle les trous sont répartis de façon essentiellement uniforme sur la partie périphérique de la lentille.

31. Lentille de contact selon l'une quelconque des revendications précédentes, dans laquelle les trous sont pratiqués par usinage à l'aide d'un laser excimer.

32. Lentille de contact selon la revendication 31, dans laquelle les trous sont forés dans un secteur de la lentille à la fois.

33. Lentille de contact selon la revendication 31 ou 32, dans laquelle le laser excimer est appliqué à travers un masque et ensuite, le faisceau laser passant à travers le masque est focalisé sur la lentille.

34. Lentille de contact selon l'une quelconque des revendications précédentes, constituée par du poly(méthacrylate de méthyle), du méthacrylate d'hydroxyéthyle ou de l'hydrogel.

35. Lentille de contact selon l'une quelconque des revendications précédentes, dont les trous contiennent un médicament.
